(19) Europäisches Patentamt / European Patent Office / Office européen des brevets

(11) **EP 4 541 181 B1**

(12) **EUROPEAN PATENT SPECIFICATION**

(45) Date of publication and mention
of the grant of the patent:
**06.08.2025 Bulletin 2025/32**

(51) International Patent Classification (IPC):
***A01K 1/015*** (2006.01)

(52) Cooperative Patent Classification (CPC):
**A01K 1/0154; A01K 1/0152; A01K 1/0155**

(21) Application number: **23215998.8**

(22) Date of filing: **12.12.2023**

(54) **CAT LITTER AND PREPARATION METHOD THEREOF**

KATZENSTREU UND HERSTELLUNGSVERFAHREN DAFÜR

LITIÈRE POUR CHAT ET SON PROCÉDÉ DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.10.2023 CN 202311359389**

(43) Date of publication of application:
**23.04.2025 Bulletin 2025/17**

(73) Proprietor: **ShenZhen YUTO Packaging Technology Co., Ltd.**
**Shenzhen City, Guangdong 518108 (CN)**

(72) Inventors:
• **CHENG, Yanfei**
**Shenzhen City, 518108 (CN)**
• **MU, Zhengyang**
**Shenzhen City, 518108 (CN)**
• **HAN, Guocheng**
**Shenzhen City, 518108 (CN)**
• **HE, Wei**
**Shenzhen City, 518108 (CN)**
• **PENG, Yao**
**Shenzhen City, 518108 (CN)**

(74) Representative: **Barker Brettell LLP**
**100 Hagley Road**
**Edgbaston**
**Birmingham, West Midlands B16 8QQ (GB)**

(56) References cited:
**US-A1- 2004 079 293     US-A1- 2023 276 766**

**Description**

**TECHNICAL FIELD**

This application relates to the technical field of pet cleaning products, in particular to a cat litter and a preparation method thereof.

**BACKGROUND**

In order to facilitate cat owners to clean up cat's feces in time, free the hands of the owners and avoid the huge odor released by manual scooping, a cat litter appeared in the market. The cat litter is an object used by the owners to bury feces and urine for their cats, which generally has good water absorption. The cat litter is classified into organic cat litter and inorganic cat litter according to its chemical properties and raw materials, in which the organic cat litter is mainly confetti cat litter and pea dregs cat litter, and the inorganic cat litter includes bentonite cat litter and crystal cat litter.

The confetti cat litter has poor water absorption and agglomeration. The pea dregs cat litter comprises corruptible components such as proteins, fats, etc. contained in the pea dregs and soybean dregs. Such components are contained in the cat litter, and thus they are prone to breeding rotten odor in the high-humidity environment in the process of using the cat litter, which not only fails to achieve deodorizing effect, but instead becomes a source of odor. The disadvantage of bentonite cat litter is mainly the problem of dust. Too much dust may cause urinary tract infection and respiratory tract infection in cats in the absence of attention. The crystal cat litter is not easy to form agglomeration, is a large particle, uncomfortable, and inconvenient to use, and cannot be discharged directly from the toilet.

US 2023/276766 A1 discloses cat litter and the preparation method thereof.

US 2004/079293 A1 discloses clumping animal litter and method of making same.

**SUMMARY**

In view of this, the present application provides a cat litter and a preparation method thereof, and aiming to provide a pet bedding material that has good water absorption, good agglomeration, no dust, good water solubility, antibacterial and deodorant function, and can be adapted to various types of smart cat toilets.

In a first aspect, an embodiment of the present application provides a cat litter which is a core-shell structure comprising:

a core, comprising the following components: 100 parts by weight of a non-grain plant fiber, 0.6-12 parts by weight of an agglomeration factor, 0.6-12 parts by weight of a water absorption factor, 0.13-2.23 parts by weight of a breeding improvement factor, 0.13-2.23 parts by weight of a deodorizing factor, and 0.13-2.23 parts by weight of an anti-mold factor; and

a shell layer cladding the core, comprising the following components: 100 parts by weight of a non-grain plant fiber, 99.5-600 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;

wherein a weight ratio of the shell layer to the core is 1: (4-5);

the non-grain plant fiber comprises one or more of a bagasse fiber, a bamboo fiber, an eucalyptus fiber, a giant fungus grass fiber, a straw fiber, an eulaliopsis binata fiber, and a bamboo shoot shell fiber;

the agglomeration factor comprises one or more of whey protein, sodium alginate, corn protein, montmorillonite, carboxymethyl cellulose and derivatives thereof, guar gum, native starch, pregelatinized starch, and jelly glue;

the water absorption factor comprises one or more of polyacrylates, starch-acrylate polymers, starch-acrylonitrile graft copolymers, acrylamide-acrylonitrile-acrylic acid terpolymers, polyacrylamides and derivatives thereof, and polyvinyl alcohol;

the breeding improvement factor comprises one or more of attapulgite, polyacrylamide-attapulgite composite adsorbent, high-purity nano-modified montmorillonite, plant essential oil, hydrated sodium aluminosilicate, diatomaceous earth, and zeolite;

the deodorizing factor comprises one or more of allophane, hydrophilic modified ultrafine silica, baking soda, nano-zinc oxide, and nano-titanium dioxide; and

the anti-mold factor comprises one or more of esterified glucomannan, hydrated sodium calcium aluminosilicate, silver-loaded zirconium phosphate antibacterial powder, copper-loaded phosphate antimicrobial powder, organic zinc ion antimicrobial powder, 5-chloro-2-methyl-4-isothiazolin-3-one, 1,2-benzisothiazolidine-3-one, 4,5-dichloro-2-n-octyl-3-isothiazolinone, 2-methyl-4-isothiazolin-3-one, and N-octyl-4-isothiazolin-3-one.

According to embodiments of one aspect of the present application, the cat litter satisfies at least one of the following conditions:

the cat litter has a water content of 5% to 10%;

the cat litter can passes through a 10-mesh sieve;

the cat litter has a dust content of ≤0.05%;

the cat litter has a bulk density of 280-400g/L;

the cat litter is in a shape of a rod, the core is in a shape of a rod, the rod has a diameter of 2-3.5mm; and the rod has a ratio of length to diameter of (1-3):1; and

the shell layer has a thickness of 0.5-3mm.

According to embodiments of one aspect of the present application, the non-grain plant fiber in the cat litter has a particle size that can pass through 80- to 100-mesh sieve.

In a second aspect, an embodiment of the present application provides a method for preparing the cat litter in the first aspect, comprising steps of:

providing a first raw material for a core comprising a component of the core in the first aspect and 120-100 parts by weigh of water;

providing a second raw material for a shell layer comprising a component of the shell layer in the first aspect and 133-1000 parts by weigh of water;

performing mixing and first stirring of the first raw material to obtain a first mixture,

performing granulating and first sieving of the first mixture to obtain a core intermediate product;

performing mixing and second stirring of the second raw material to obtain a shell layer mixture;

wetting the core intermediate product and then wrapping the wetted core intermediate product with the shell layer mixture to prepare a wrapped mixture; and

performing second sieving, drying and third sieving of the wrapped mixture sequentially to prepare the cat litter.

According to embodiments of one aspect of the present application, the method satisfies at least one of the following conditions:

the first stirring is carried out at a speed of 5-850 r/min for 0.5-5 minutes;

the granulating is carried out at a speed of 800-1000 r/min;

the second mixing is carried out at a speed of 0-1500r/min for 0.5-3 minutes;

the core intermediate product has a water content below 45%;

the core intermediate product is in a shape of a rod, has a diameter of 2-3.5mm, and has a ratio of length to diameter of (1-3):1;

the shell layer mixture has a water content below 50%;

the wrapping is carried out for 2-6 minutes at a rotational speed of 30-60 r/min of a device;

the wrapped mixture has a water content below 45%;

the product obtained after the second sieving has a particle size that can pass through m-mesh sieve, 5 < m < 8;

the product obtained after the third sieving has a particle size that can pass through n-mesh sieve, 8 < n < 12, optionally, n is 10;

the drying is carried out at a temperature of 65-75°C; and

the method further comprises polishing and shaping the dried product after the drying, in which the polishing is carried out at a rotational speed of 30-60 r/min for 15-30 min.

The present application has at least the following beneficial effects:

1. The cat litter of the present application comprises a core and a shell layer each comprising a non-grain plant fiber, an agglomeration factor, a water absorption factor, a breeding improvement factor, a deodorizing factor, and an anti-mold factor. The synergistic effect of each component makes the cat litter have good agglomeration and moisture absorption, realizing the urine agglomerated cat litter and the feces wrapped cat litter which may be effectively separated from the unagglomerated clean cat litter. As a result, the unused cat litter is not wasted, and the cat's urine agglomerated parts are not easy to stink and mold. In addition, the non-grain plant fiber is used as the main raw material to make the cat litter have good water solubility, and thus the used agglomerated cat litter can be poured into the toilet and directly flushed away.

2. The cat litter of the present application comprises a core and a shell layer each comprising a non-grain plant fiber. Compared with the bentonite cat litter, tofu/bentonite mixed cat litter and tofu cat litter, the cat litter of the present application has lower weight and lower specific gravity, which is convenient for the handling during storage and replacement of the cat litter.

3. The cat litter of the present application uses the shell layer to clad the core. The weight ratio of the core to the shell layer is in a suitable range, it is beneficial to improving the agglomeration of the cat litter and reducing the ratio of dust content, and also beneficial to the agglomeration of the cat litter after moisture absorption and wrapping the cat litter feces. When combined with the relevant process, the plant fiber cat litter has a strictly controlled dust content, and has ultra low dust compared with the bentonite cat litter, tofu/bentonite mixed cat litter and tofu cat litter, which is beneficial to the respiratory health of pets and breeders.

## DESCRIPTION OF THE DRAWINGS

In order to more clearly explain the technical solution of the embodiments of this application, the drawings used in the embodiments are briefly introduced. The ordinary technicians in the art could obtain other drawings according to these drawings without creative labor.

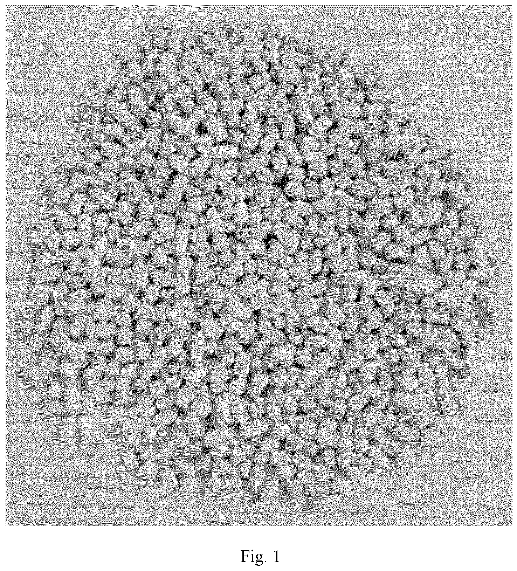

Fig. 1 shows the cat litter in example 1 of this application.

## DETAILED DESCRIPTION

In order to make the purpose of the application, the technical solutions and the beneficial technical effects of the present application clearer, the present application is described in further detail below in conjunction with examples. It should be understood that the embodiments described in the description are intended only to explain the present application and are not intended to limit the present application.
For simplicity, only some numerical ranges are explicitly disclosed in the present application. However, any lower limit may be combined with any upper limit to form an unspecified range; and any lower limit may be combined with other lower limits to form an unspecified range, and likewise any upper limit may be combined with any other upper limit to form an unspecified range. In addition, although not explicitly described, each point value or individual value between the endpoints of the range is included in the range. Thus, each point value or individual value can be combined with any other point value or individual value as its own lower or upper limit or with other lower or upper limits to form an unspecified range.

In the description of the present application, it should be noted that, unless otherwise indicated, the terms "above" and "below" are inclusive of the present number, and the term "more" in the phrase "one or more" means two or more.

The foregoing aspects of the present application are not intended to describe every disclosed embodiment or every realization of the present application. Exemplary embodiments are more specifically exemplified in the following description. At various points throughout the application, guidance is provided through a series of embodiments that may be used in various combinations. In the various examples, the examples are provided as representative groups only and should not be construed as exhaustive.

In the process of cleaning cat feces by rotating the built-in grating plate of the smart cat toilet, the cat litter particle aggregates will flow with the rotation of the grating plate. The flow of the particle aggregates is essentially caused by the imbalance of the force of the particles in the particle aggregates. It can be seen from the analysis of the force of the particles, that the force in the process of the flow of the particle is gravity, the adhesion force, friction force, and electrostatic force between the particles, etc. The forces that have the greatest influence on the flow of the particle are gravity and adhesion force.

The factors affecting the flowability of the cat litter particles are complex, and it has been found that the particle size distribution, particle shape, and degree of sphericity of the cat litter have an important effect on its flowability. In addition, factors such as water content, electrostatic voltage, void ratio, bulk density, and internal friction coefficient also have an effect on the flowability of the particles. Analyzing the factors influencing the flowability of the particles is important for adopting scientific methods to improve the flowability of the particle aggregates.

The present application provides a cat litter comprising a core and a shell layer. The components of the core and the shell layer, as well as their weight ratios, affect the flowability of the cat litter, so that the cat litter of the present application achieves the goal of being freely adapted to the various types of smart cat toilets available on the market and universality to the passage of the smart cat toilets, realizing the urine agglomerated cat litter and the feces wrapped cat litter which may be effectively separated from the unagglomerated clean cat litter. As a result, the unused cat litter is not wasted, and the cat's urine agglomerated parts are not easy to remain in the clean cat litter, reducing the odor residue.

**Cat litter**

In a first aspect, an embodiment of the present application provides a cat litter which is a core-shell structure comprising:

a core, comprising the following components: 100 parts by weight of a non-grain plant fiber, 0.6-12 parts by weight of an agglomeration factor, 0.6-12 parts by weight of a water absorption factor, 0.13-2.23 parts by weight of a breeding improvement factor, 0.13-2.23 parts by weight of a deodorizing factor, and 0.13-2.23 parts by weight of an anti-mold factor; and

a shell layer cladding the core, comprising the following components: 100 parts by weight of a non-grain plant fiber, 99.5-600 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;

wherein a weight ratio of the shell layer to the core is 1: (4-5);

the non-grain plant fiber comprises one or more of a bagasse fiber, a bamboo fiber, an eucalyptus fiber, a giant fungus grass fiber, a straw fiber, an eulaliopsis binata fiber, and a bamboo shoot shell fiber;

the agglomeration factor comprises one or more of whey protein, sodium alginate, corn protein, montmorillonite, carboxymethyl cellulose and derivatives thereof, guar gum, native starch, pregelatinized starch, and jelly glue;

the water absorption factor comprises one or more of polyacrylates, starch-acrylate polymers, starch-acrylonitrile graft copolymers, acrylamide-acrylonitrile-acrylic acid terpolymers, polyacrylamides and derivatives thereof, and polyvinyl alcohol;

the breeding improvement factor comprises one or more of attapulgite, polyacrylamide-attapulgite composite adsorbent, high-purity nano-modified montmorillonite, plant essential oil, hydrated sodium aluminosilicate, diatomaceous earth, and zeolite;

the deodorizing factor comprises one or more of allophane, hydrophilic modified ultrafine silica, baking soda, nano-zinc oxide, and nano-titanium dioxide; and

the anti-mold factor comprises one or more of esterified glucomannan, hydrated sodium calcium aluminosilicate, silver-loaded zirconium phosphate antibacterial powder, copper-loaded phosphate antimicrobial powder, organic zinc ion antimicrobial powder, 5-chloro-2-methyl-4-isothiazolin-3-one, 1,2-benzisothiazolidine-3-one, 4,5-dichloro-2-n-octyl-3-isothiazolinone, 2-methyl-4-isothiazolin-3-one, and N-octyl-4-isothiazolin-3-one.

According to embodiments of the present application, the cat litter of the present application, by differentiating the design of the core and the shell layer, has the shell layer comprising a suitable part by weight of the agglomeration factor, which facilitates the agglomeration of the cat litter during the preparation. When cat litter is used, the above part by weight of the agglomeration factor in the shell layer, under the action of the above part by weight of the water absorption factor in the shell layer, facilitates the absorption of water in the cat urine and the cat feces by the cat litter, as to carry out the agglomeration and avoid the contamination of other cat litters. When the water absorption factor in the shell layer absorbs water from the cat urine and the cat feces, the suitable parts by weight of the non-grain plant fiber and the water absorption factor in the shell layer act together to maintain the absorbed water. With the suitable weight ratio of shell layer to core, the pet bedding material having water absorption, agglomeration, antibacterial and deodorizing functions and adaptability to various smart cat toilets is prepared.

The shell layer in the cat litter has a water-absorbing effect and a water-absorbing coagulation effect, providing excellent water-absorbing performance for the cat litter, preventing rapid leakage of the cat urine to the bottom of the litter box which is not convenient for cleaning, and at the same time providing the cat litter with good rapid agglomeration as well as excellent agglomeration drop strength.

The core in the cat litter is modified by raw material selection, water content control and weight gain modification to provide the core with high hardness. A suitable weight ratio of the core to the shell layer provides the cat litter with high body hardness, body specific gravity and excellent shape support.

The cat litter of the present application with the plant fiber as the main raw material has properties of no dust, safe and non-pollution, biodegradation, natural and renewable raw material, fast water absorption, strong agglomeration, deodorization, and universality to various kinds of smart cat litter.

The cat litter of the present application has water-absorbing, agglomerating, antibacterial and deodorizing functions and can be adapted to various kinds of smart cat toilets.

In some optional embodiments, the cat litter has a sphericity satisfying: a cumulative distribution rate of particles with a roundness value of greater than or equal to 0.7 is greater than or equal to 88%; and a cumulative distribution rate of particles with a roundness value of less than or equal to 0.3 is less than or equal to 1.5%. By controlling the sphericity of the cat litter, the friction and adherence between the cat litter particles are reduced, the flowability index of the cat litter particles is improved, and the probability of particle bridging formation is reduced to zero. The dust content of the cat litter is strictly controlled by multi-stage and multi-screening, eliminating the adhesion in the process of flow of the particles due to fine dust, and thus improving the flowability index of the cat litter particles.

The relationship between the particle size of different particles and the flowability of the particles is analyzed. Spherical particles have the smallest contact area with each other and thus have the best flowability, cubic particles have the second best flowability, other irregularly shaped particles have the general flowability, and flaky, dendritic, and acicular particles have a large number of planar contact points on their outer surfaces and irregular inter-particle shear, and thus are poorly flowable.

According to embodiments of the present application, the weight ratio of the shell layer to the core is in the above range, which controls the bulk density of the cat litter in a suitable range, and reduces the problem of poor flowability and low grid passability due to its low weight and low specific gravity in the related technology, which is caused by the cat litter not following the rotation of the cat litter box and sliding down from the bottom of the box in the direction of rotation during the process of rotating the smart cat litter box to clean up the cat faces. The problem is solved by using the suitable density.

In some optional embodiments, the cat litter has a bulk density of 280-400 g/L.

According to embodiments of the present application, compared to a bulk density of about 500-600g/L for the tofu cat litter, about 700-800g/L for the tofu/bentonite mixed cat litter, and up to 1000g/L for the bentonite cat litter, the bulk density of the plant fiber cat litter of the present application is only 280-400g/L. The low weight and low specific gravity of the present application facilitates the handling during storage and replacement of the cat litter.

In some optional embodiments, the cat litter has a water content of 5%-10%.

According to embodiments of the present application, the water content of the cat litter is in the above range, which on the one hand can improve the comfort of the cat in contact with the cat litter, and on the other hand can improve the agglomeration of the components in the cat litter. A certain amount of water-absorbing performance facilitates adsorption of water in the cat feces to realize agglomeration. In addition, the water content of the cat litter in the above range reduces mutual attraction and adhesion between the particles caused by the electrostatic interaction of the over-dried finished particles, and improves the flowability index of the cat litter particles to improve the flowability of the cat litter and the passability of the unagglomerated clean cat litter through the hollow lattice on the grid plate in the process of cleaning cat feces by rotating the smart cat toilets.

In some optional embodiments, the cat litter can pass through a 10-mesh sieve. Optionally, the cat litter may pass through a filter sieve of any value of 10 mesh, 20 mesh, 30 mesh, 40 mesh, 50 mesh, or a range consisting of any two of the above values.

The cat litter can pass through a 10-mesh sieve, which can be understood as follows: The 10-mesh sieve typically has an aperture size of about 2.00-3.5 mm. The 20-mesh sieve typically has an aperture size of about 1.00 mm. If the cat litter can pass through 20-mesh and 25-mesh sieve, it will certainly pass through the 10-mesh sieve of equal aperture. The cat litter that passes through the 10-mesh sieve is suitable for passing through the apertures between the grids in the smart cat litter box when the cat litter is used.

According to embodiments of the present application, the cat litter passing through a 10-mesh sieve has a particle size satisfying the above conditions. By controlling the raw materials and molding process in each section of the cat litter molding, the flowability of the non-grain plant fiber contained in the cat litter can be improved; the unagglomerated clean cat litter can be retained in the grating plate in the smart cat toilet, so that the unused cat litter is not wasted; the agglomerated cat litter comprising the cat feces can be directly discharged from a sewer such as a toilet, and has a better flowability, which will not cause clogging.

In some optional embodiments, the cat litter has a dust content of ≤ 0.05%.

According to embodiments of the present application, the dust content of the cat litter is in the above range, which is conducive to providing a clean and comfortable environment for the cat, reducing the effect of dust on the cat's urinary system and respiratory system, and facilitating the health of the cat.

In some optional embodiments, the cat litter has a bulk density of 280-400 g/L.

The bulk density refers to the density of deposits formed by particulate or powder materials under specific conditions. It is usually expressed as a ratio of weight to volume, usually in grams per cubic centimeter ($g/cm^3$) or kilograms per cubic meter ($kg/m^3$).

In some optional embodiments, the cat litter is in a shape of a rod, the core is in a shape of a rod, the rod has a diameter of 2-3.5mm; and the rod has a ratio of length to diameter of (1-3):1; and the shell layer has a thickness of 0.5-3mm.

According to embodiments of the present application, when the cat litter is in a shape of a rod, the core is in a shape of a rod, the diameter of the rod is 2~3.5mm, the rod has a ratio of length to diameter of (1-3):1, and the shell layer has a thickness of 0.5-3mm, the cat litter having the above shape and the ratio of length to diameter of the rod and the thickness of the shell layer can be adapted to the smart cat toilets, so that the urine agglomerated cat litter and the feces wrapped cat litter may be completely separated from the unused clean cat litter, without causing waste of unused clean cat litter.

According to embodiments of the present application, the size and shape of the cat litter particles are controlled by device modulation to improve the sphericity of the cat litter particles; the cat litter is consolidated by wrapping the core with the shell layer, so as to achieve a better bond between the core and the shell layer, improve the shape and size uniformity of the cat litter particles, and improve the sphericity of the cat litter particles, which contributes to an increase in the flowability index of the cat litter particles.

According to embodiments of the present application, the particle size, shape, inter-particle interactions, and water content of the cat litter affect the flowability of the cat litter. The size and the size distribution of the cat litter particles are controlled according to the size of the hollow lattice on the grid plate of the smart cat toilets, so that the cat litter of the present application achieves the goal of being freely adapted to the various types of smart cat toilets available on the market and universality to the passage of the smart cat toilets, realizing the urine agglomerated cat litter and the feces wrapped cat litter which may be effectively separated from the unagglomerated clean cat litter. As a result, the unused cat litter is not wasted, and the cat's urine agglomerated parts are not easy to remain in the clean cat litter, reducing the odor residue.

As an example of the present application, the cat litter comprises: a core, comprising the following components: 100 parts by weight of a non-grain plant fiber, 0.6-8 parts by weight of an agglomeration factor, 0.6-8 parts by weight of a water absorption factor, 0.13-1.23 parts by weight of a breeding improvement factor, 0.13-2.23 parts by weight of a deodorizing factor, and 0.13-2.23 parts by weight of an anti-mold factor; and a shell layer cladding the core, comprising the following components: 100 parts by weight of a non-grain plant fiber, 99.5-400 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;

wherein, the non-grain plant fiber comprises one or more of a bagasse fiber, a bamboo fiber, and an eucalyptus fiber; the agglomeration factor comprises one or more of sodium carboxymethyl cellulose, guar gum, native starch, and pregelatinized starch; a weight ratio of the shell layer to the core is 1: (4-5); the cat litter has a water content of 5% to 10%; the cat litter can passes through a 10-mesh sieve; the cat litter has a bulk density of 280-400g/L; the cat litter is in a shape of a rod, the core is in a shape of a rod, the rod has a diameter of 2-3.5mm; and the rod has a ratio of length to diameter of (1-3):1; and the shell layer has a thickness of 0.5-3mm. The cat litter has a dust content of ≤0.05%, the cat litter has a flowability index of 85-95, the cat litter has a weight of agglomeration of 25-30 grams per 20 grams of water; the cat litter has a strength of agglomeration of 90%-98%, the cat litter has a water absorption rate of 200%-300%, and the cat litter begins to mold at more than 30 days.

As an example of the present application, the cat litter comprises: a core, comprising the following components: 100 parts by weight of a non-grain plant fiber, 0.6-10 parts by weight of an agglomeration factor, 0.6-10 parts by weight of a water absorption factor, 0.13-2.23 parts by weight of a breeding improvement factor, 0.1-2.23 parts by weight of a deodorizing factor, and 0.13-2.23 parts by weight of an anti-mold factor; and a shell layer cladding the core, comprising the following components: 100 parts by weight of a non-grain plant fiber, 99.5-100 parts by weight of an agglomeration factor, 50-100 parts by weight of a water absorption factor, 33.3-300 parts by weight of a breeding improvement factor, 3.33-100 parts by weight of a deodorizing factor, and 0.66-20 parts by weight of an anti-mold factor;

wherein, the non-grain plant fiber comprises one or more of a bagasse fiber, a bamboo fiber, and an eucalyptus fiber; the agglomeration factor comprises one or more of sodium carboxymethyl cellulose, guar gum, native starch, and pregelatinized starch; a weight ratio of the shell layer to the core is 1: (4-5); the cat litter has a water content of 5% to 10%; the cat litter can passes through a 10-mesh sieve; the cat litter has a bulk density of 280-400g/L; the cat litter is in a shape of a rod, the core is in a shape of a rod, the rod has a diameter of 2-3.5mm; and the rod has a ratio of length to diameter of (1-3):1; and the shell layer has a thickness of 0.5-3mm. The cat litter has a dust content of ≤0.05%, the cat litter has a flowability index of 85-95, the cat litter has a weight of agglomeration of 25-30 grams per 20 grams of water; the cat litter has a strength of agglomeration of 90%-98%, the cat litter has a water absorption rate of 220%-250%, and the cat litter begins to mold at more than 30 days.

As an example, the appearance of the cat litter is shown in Fig. 1.

According to embodiments of the present application, the above fibers such as the bamboo fiber, the eucalyptus wood powder are hard and elastic, strong and high density plant fiber powder, and used as the main raw material for the support portion of the core of the cat litter, providing high body hardness and excellent shape support for the cat litter, which is conducive to further control of the shape and size of the cat litter particles, as well as further post-processing procedures such as wrapping the shell layer on the core and polishing and shaping, improve the uniformity of shape and size of cat litter particles, improve the flowability index and sphericity of cat litter particles, improve the flowability of the unagglomerated clean cat litter, and improve the passability of the unagglomerated clean cat litter through the hollow lattice on the grid plate of the smart cat toilets.

According to embodiments of the present application, the non-grain plant fiber adopts the above natural plant fiber originating from agricultural and forestry operations, which is a non-grain renewable resource and is environmentally sustainable; the source of the raw material is not restricted, and there is an adequate supply of natural renewable non-grain plant fiber resources.

In some optional embodiments, the non-grain plant fiber in the cat litter has a particle size that can pass through 80- to 100-mesh sieve.

According to embodiments of the present application, by controlling the particle size of the non-grain plant fiber in the cat litter in the above range, it facilitates the improvement of the water solubility of the cat litter, which is easy to be discharged from an indoor sewer such as a toilet, and provides convenience for the keeper.

According to embodiments of the present application, the above agglomeration factor may improve the agglomeration among the non-grain plant fibers and among non-grain plant fiber and other components. The above agglomeration factor may improve the agglomeration among the cat litters, and among the cat litter and cat feces and other feces, facilitating encapsulation of cat feces and reducing contamination of other cat litter.

According to embodiments of the present application, on the one hand, the water absorption factor acts in conjunction with the non-grain plant fiber to adsorb water in the cat feces, reducing the contamination of other cat litter, and on the other hand, the non-grain plant fiber acts with the water absorption factor to provide a certain degree of water-absorbing and water-retaining properties, reducing water seepage from adsorbed cat feces and reducing the contamination of other cat litter.

According to embodiments of the present application, the core layer of the plant fiber cat litter is weight-modified using the breeding improvement factor. The weight-modified cat litter has an improved flowability index and passes through the grates of cat toilets more easily without resulting in wasted cat litter.

**Preparation method of cat litter**

In a second aspect, an embodiment of the present application provides a method for preparing the cat litter in the first aspect, comprising steps of:

providing a first raw material for a core comprising the following components: 100 parts by weight of a non-grain plant fiber, 20-100 parts by weight of water, 0.6-12 parts by weight of an agglomeration factor, 0.6-12 parts by weight of a water absorption factor, 0.13-2.23 parts by weight of a breeding improvement factor, 0.13-2.23 parts by weight of a deodorizing factor, and 0.13-2.23 parts by weight of an anti-mold factor;

providing a second raw material for a shell layer comprising the following components: 100 parts by weight of a non-grain plant fiber, 133-1000 parts by weigh of water, 99.5-600 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;

performing mixing and first stirring of the first raw material to obtain a first mixture,

performing granulating and first sieving of the first mixture to obtain a core intermediate product;

performing mixing and second stirring of the second raw material to obtain a shell layer mixture;

wetting the core intermediate product and then wrapping the wetted core intermediate product with the shell layer mixture to prepare a wrapped mixture; and

performing second sieving, drying and third sieving of the wrapped mixture sequentially to prepare the cat litter.

According to embodiments of the present application, the two-step method of granulation molding and mixing the outer wrapping material reduces the problems of loose appearance, low integrity, and much debris of the molded cat litter. The specialized device for wrapping the core is used to spray and wet the pressing core molding particles, wrap the core with the shell layer so as to achieve a better bond between the core and the shell layer, and solidify the wrapping shell layer. The cat litter obtained by this process has compact appearance, high integrity, and less debris, improving the uniformity of the shape and size of the cat litter particles, and improving the flowability index of the cat litter particles.

In some optional embodiments, the first stirring is carried out at a speed of 5-850 r/min for 0.5-5 minutes.

In some optional embodiments, the granulating is carried out at a speed of 800-1000 r/min.

In some optional embodiments, the second mixing is carried out for 0.5-3 minutes at a speed of 0-1500r/min, optionally 5-1000 r/min.

In some optional embodiments, before providing a first raw material for a core or providing a second raw material for the shell layer, the method comprises: pulverizing the non-grain plant fiber raw material for the core of the cat litter particles to a fineness of 200-400 meshes using a plant fiber pulverizing device.

In some optional embodiments, performing mixing and first stirring of the first raw material to obtain a first mixture comprises:

mixing the non-grain plant fiber in the first raw material evenly by using a stirring and mixing device at a mixing speed of 0-850 r/min for 0.5-3 minutes;

adding water to the non-grain plant fiber in parts by weight under stirring, continuing to stir after the water addition is completed, in which the stirring speed is 0-850r/min, and the total stirring time is 0.5-3 minutes, and setting aside after the stirring and mixing is completed to obtain a first raw material mixture;

stirring and mixing each material of the agglomeration factor, water absorption factor, breeding improvement factor, deodorizing factor, and anti-mold factor in the above parts by weight evenly by using the stirring and mixing device at a stirring speed of 0-1500r/min for a total stirring time of 0.5-3 minutes, to obtain the second raw material mixture;

mixing and stirring the first raw material mixture and the second raw material mixture at a stirring speed of 0-850 r/min for a total stirring time of 0.5-5 minutes to obtain the first mixture.

In some optional embodiments, performing granulating and first sieving of the first mixture to obtain a core intermediate product comprises:
granulating the first mixture with a granulating device having a mold aperture diameter of 2-3.5 mm, a mold aperture length of 8-20 mm, a mold compression ratio of 1.5-9, flared release ports at both ends of the mold aperture, a vertical depth of the flared release ports of 1 mm, and an angle of 60° between the tangent line of the flared release ports curved surface and the mold plane, setting the cutter knives of the granulating device to be in a horizontal state, the distance between the knife blade and the mold plane to be 0.1-0.5mm, so that the diameter of the pressed cat litter particle core is controlled to be 2-3.5mm, and the ratio of length to diameter is controlled to be (1-3):1, in which the granulating device operates at a rotational speed of 800-1000r/min, and then performing the first sieving to obtain the core intermediate product.

In some embodiments, the first sieving comprises: sieving a mixture of the core intermediate product obtained by core pressing and the debris and powders produced by core pressing using an 8-mesh sieve. The sieved particles will enter process of wetting and wrapping; the debris and powders removed by the sieving will not waste the material for wrapping the core and will not result in more debris particles during the wrapping process.

In some optional embodiments, the core intermediate product is in a shape of a rod, has a diameter of 2-3.5mm, and has a ratio of length to diameter of (1-3):1.

In some optional embodiments, the wrapping is carried out for 2-6 minutes at a rotational speed of 30-60 r/min of a device.

In some optional embodiments, the core intermediate product has a water content below 45%.

In some optional embodiments, the shell layer mixture has a water content below 50%. In some optional embodiments, the wrapped mixture has a water content below 45%.

According to embodiments of the present application, the water content is strictly controlled in a suitable range at various stages of the cat litter molding, which improves the hardness of the cat litter while safeguarding the cat litter molding, reduces the mutual attraction and adhesion between particles due to static electricity caused by drying of the cat litter during the preparation process and the use of the cat litter, and improves the flowability index.

The water content control of each semi-finished product and the finished product includes controlling the water content of the core of the press molded cat litter to be below 45%, controlling the water content of the wet cat litter to be below 45% after the shell layer wrapping is completed, and controlling the water content of the cat litter between 5 and 10% after the shell layer wrapping and the drying are completed.

In some optional embodiments, a 5-mesh filter sieve is used to perform the second sieving of the wrapped mixture. The wrapped mixture can be understood as huge particles formed by the particle adhesion caused by the wet wrapping process in the stage of wrapping the core. After the wrapping, a 5-mesh filter sieve is used to sieve all the wrapped particles, the wrapped particles with greater than 5 meshes are retained for drying, and the wrapped particles with less than 5 meshes are sieved out and transported into the core pressing and granulating process.

In some optional embodiments, multiple sieving is performed after polishing and shaping.

According to embodiments of the present application, after drying, polishing and shaping, there will be a large amount of powder falling off from the wrapped particles with greater than 5 meshes. After polishing and shaping, multiple sieving is performed on all polished and shaped particles using a filter sieve with 8-12 meshes, the polished and shaped particles with a particle size less than the target particle size are put into the inventory, and powder particles with a particle size larger than 1 mesh and less than the target particle size are sieved out and transferred into the core pressing and granulating process, and a dust content is controlled to be below 0.05%.

In addition, the multiple sieving of the present application may be multi-stage sieving with different particle sizes, or multiple sieving including the same particle size. The multiple sieving process strictly controls the large size particles and dust content in the cat litter finished product, eliminates stickiness due to fine dust during the flow of the cat litter, and thus improves the flowability index of the cat litter particles.

In some optional embodiments, performing mixing and second stirring of the second raw material to obtain a shell layer mixture comprises:

pulverizing the non-grain plant fiber raw material of the second raw material to a fineness of 80-100 meshes;

mixing the non-grain plant fiber, agglomeration factor, water absorption factor, breeding improvement factor, deodorizing factor, and anti-mold factor in the second raw material in the above weight ratio evenly by using a stirring and mixing device at a mixing speed of 0-1500 r/min for 0.5-3 minutes, to obtain the shell layer mixture.

In some optional embodiments, wrapping the wetted core intermediate product with the shell layer mixture to prepare a wrapped mixture comprises:
adding the shell layer mixture into the wetted core intermediate product using a device for wrapping the core, optionally under rotating, in which a rotational speed of the device is 30-60 r/min, and a wrapping time is 2-6 minutes, and the wetted shell layer for wrapping the core has a thickness of 0.5 mm or more.

In some optional embodiments, wetting the core intermediate product comprises: wetting the core intermediate product in the rotating device by means of a spray treatment, wherein the device has a rotational speed of 30-60r/min.

In some optional embodiments, wrapping the wetted core intermediate product with the shell layer mixture to prepare a wrapped mixture comprises; and
performing second sieving, drying and third sieving of the wrapped mixture sequentially to prepare the cat litter.

In some optional embodiments, the product obtained after the second sieving has a particle size that can pass through m-mesh sieve, 5 < m < 8.

In some optional embodiments, the product obtained after the third sieving has a particle size that can pass through n-mesh sieve, 8 < n < 12, optionally, n is 10.

In some optional embodiments, the drying is carried out at a temperature of 65-75°C.

In some optional embodiments, the method further comprises polishing and shaping the dried product after the drying, in which the polishing is carried out at a rotational speed of 30-60 r/min for 15-30 min.

According to embodiments of the present application, the polished and shaped plant fiber cat litter particles enter sieving and dust removal processes. After drying, polishing and shaping, there will be a large amount of powder falling off from the wrapped particles with less than 8 meshes and more than 5 meshes. After polishing and shaping, multiple sieving is performed on all polished and shaped particles using a 10-mesh filter sieve, the polished and shaped particles with a particle size less than 10 meshes are put into the inventory, and powder particles with a particle size larger than 10 meshes are sieved out and transferred into the core pressing and granulating process. The dust content of the polished and shaped particles with less than 10 meshes is controlled to be below 0.05%, so as to obtain the non-grain plant fiber cat litter product which is universally applicable to passing through the grid of the smart cat toilets.

In order to solve the problem that cat litter bridges are easily blocked on the grid due to particles of cat litter, the cat litter particles obtained after shell layer wrapping and drying are polished and shaped to reduce friction between the cat litter particles, reduce adhesion between the cat litter particles, enhance the sphericity of the cat litter particles and the smoothness of the surface of the particles, improve the flowability index of the cat litter particles, so that the probability of particle bridging formation is reduced to zero, and the unagglomerated clean cat litter will be able to pass through the hollow lattice on the grid plate of the smart cat toilets.

## Examples

The following examples more particularly describe the disclosure of the present application, and these examples are for illustrative purposes only, as various modifications and variations within the scope of the disclosure of the present application will be obvious to those skilled in the art. Unless otherwise stated, all parts, percentages, and ratios reported in the following Examples are based on weight, and all reagents used in the Examples are commercially available or synthesized according to conventional methods and can be used directly without further processing, and the apparatus used in the Examples are commercially available.

## Examples 1 and 2

This example provides a cat litter, which comprises a core comprising the following components: 100 parts by weight of a non-grain plant fiber, 0.6-12 parts by weight of an agglomeration factor, 0.6-12 parts by weight of a water absorption factor, 0.13-2.23 parts by weight of a breeding improvement factor, 0.13-2.23 parts by weight of a deodorizing factor, and 0.13-2.23 parts by weight of an anti-mold factor; and

a shell layer cladding the core comprising the following components: 100 parts by weight of a non-grain plant fiber, 99.5-600 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;

wherein a weight ratio of the shell layer to the core is 1: (4-5). The specific raw materials and weight ratios of Examples 1 and 2 are shown in Table 1.

This example provides a method for preparing the cat litter, comprising steps of:

(1) pulverizing the non-grain plant fiber raw material for the core of the cat litter particles to a fineness of 200-400 meshes using a specialized plant fiber pulverizing device;

(2) mixing the non-grain plant fiber in parts by weight evenly by using a specialized stirring and mixing device at a mixing speed of 0-850 r/min for 0.5-3 minutes;

(3) adding water to the non-grain plant fiber obtained in step (2) in parts by weight under stirring, continuing to stir after the water addition is completed, in which the stirring speed is 0-850r/min, and the total stirring time is 0.5-3 minutes, and setting aside after the stirring and mixing is completed;

(4) stirring and mixing each material of the agglomeration factor, water absorption factor, breeding improvement factor, deodorizing factor, and anti-mold factor in the above parts by weight evenly by using the specialized stirring and mixing device at a stirring speed of 0-1500r/min for a total stirring time of 0.5-3 minutes;

(5) adding stirred mixture obtained in step (4) to the mixture of the non-grain plant fiber and water obtained in step (3) under stirring, continuing to stir after the addition of the mixture obtained in step (4) is completed, in which the stirring speed is 0-850r/min, and the total stirring time is 0.5-5 minutes;

(6) granulating continuously the mixture obtained in step (5) with a specialized granulating device having a mold aperture diameter of 2-3.5 mm, a mold aperture length of 8-20 mm, a mold compression ratio of 1.5-9, flared release ports at both ends of the mold aperture, a vertical depth of the flared release ports of 1 mm, and an angle of 60° between the tangent line of the flared release ports curved surface and the mold plane, setting the cutter knives of the granulating device to be in a horizontal state, the distance between the knife blade and the mold plane to be 0.1-0.5mm, so that the diameter of the pressed cat litter particle core is controlled to be 2-3.5mm, and the ratio of length to diameter is controlled to be (1-3):1, in which the granulating device operates at a rotational speed of 800-1000r/min;

(7) sieving the particles obtained by core pressing and the debris and powders produced by core pressing using an 8-mesh sieve after the granulation of the cat litter core is completed, and the sieved particles entering the process of wetting and wrapping;

(8) pulverizing the non-grain plant fiber raw material required for the shell layer of the cat litter to a fineness of 80-100 meshes using a specialized plant fiber pulverizing device;

(9) mixing the non-grain plant fiber obtained in step (8), agglomeration factor, water absorption factor, breeding improvement factor, deodorizing factor, and anti-mold factor in the above parts by weight evenly by using a specialized stirring and mixing device at a mixing speed of 0-1500 r/min for 0.5-3 minutes;

(10) wetting the intact particles obtained by sieving in (7) using an amount of water based on the amount of water in the cat litter shell layer component, wetting the core intermediate product in the rotating device by means of a spray treatment, wherein the device has a rotational speed of 30-60r/min;

(11) wrapping the wetted core intermediate product of the cat litter, transferring the wetted core intermediate product of the cat litter obtained in step (10) to the specialized device for wrapping the core, turning on the device for wrapping the core to rotate, and quickly adding the shell layer material of the cat litter obtained in step (9) to the wetted core intermediate product of the cat litter under rotating, in which a rotational speed of the device is 30-60 r/min, and a total wrapping time is 2-6 minutes, and the wrapping shell layer of the cat litter has a thickness of 0.5 mm or more;

(12) for huge particles obtained in step (11) formed by the particle adhesion caused by the wet wrapping process in the stage of wrapping the core, sieving all the wrapped particles with a 5-mesh filter sieve after the wrapping, so that the wrapped particles with greater than 5 meshes are sieved out and transported into the core pressing and granulating process, the wrapped particles with less than 8 meshes and greater than 5 meshes enter the drying process, and crushed slag and powder with greater than 8 meshes are sieved out and transported into the core pressing and granulating process;

(13) drying the wrapped particles with less than 8 meshes and greater than 5 meshes at a drying temperature of 65-75°C, to obtain the dried particles cat litter with overall water content between 5 and 10%;

(14) polishing and shaping the dried cat litter particles with a specialized rotary polishing device after the drying, in which the polishing is carried out at a rotational speed of 30-60 r/min for 15-30 min; and

(15) performing sieving and dust removal on the polished and shaped plant fiber cat litter particles, wherein after drying, polishing and shaping, there will be a large amount of powder falling off from the wrapped particles with less than 8 meshes and more than 5 meshes; after polishing and shaping, multiple sieving is performed on all polished and shaped particles using a 10-mesh filter sieve, the polished and shaped particles with a particle size less than 10 meshes are put into the inventory, and powder particles with a particle size larger than 10 meshes are sieved out and transferred into the core pressing and granulating process; the dust content of the polished and shaped particles with less than 10 meshes is controlled to be below 0.05%, so as to obtain the cat litter which is universally applicable to passing through the grid of the smart cat toilets.

Examples 1 and 2 were prepared with the parameters shown in Table 2.

**Comparative Examples 1-2**

Comparative Examples 1-2 differs from Example 1 in that the composition of the cat litter and the preparation method are shown in Tables 1 and 2.

**Comparative Example 3**

Comparative Example 3 provides a commercially available tofu cat litter, comprising bean dregs accounting for 90% of the total weight of the tofu cat litter, with the remaining being an agglomeration agent and an anti-mold agent.

**Comparative Example 4**

Comparative Example 4 provides a cat litter comprising bentonite. Bentonite is heavy and requires very laborious handling when storing and replacing the cat litter. Secondly, the bentonite cat litter has a lot of dust, which will be harmful to the respiratory and urinary systems of cats.

Table 1 is shown below.

| Raw materials and components | | Example 1 | | Example 2 | | Comparative Example 1 | | Comparative Example 2 | |
| --- | --- | --- | --- | --- | --- | --- | --- | --- | --- |
| | | Core | Shell layer | Core | Shell layer | Core | Shell layer | Core | No shell layer |
| Non-grain plant fiber | Bamboo fiber | 75 | | | | | | | |
| | Eucalyptus fiber | | | 75 | | 75 | | 75 | |
| | | | | | | | | | |
| | bagasse fiber | | 15 | | 10 | | 10 | | |
| Water | | 45 | 50 | 30 | 40 | 30 | 40 | 30 | |
| Agglomeration factor | Pregelatinized starch | 0.5 | 15 | | | | | | |
| | Guar gum | | | | | | | | |
| | Sodium carboxymethyl cellulose | | | 5 | 30 | 5 | 30 | 5 | |
| Water absorption factor | Polyvinyl alcohol | 0.5 | 0.5 | | | | | | |
| | Polyacrylamide | | | | | | | | |
| | Sodium polyacrylate | | | 5 | 5 | 5 | 5 | 5 | |
| Breeding improvement factor | Hydrated sodium aluminosilicate | 0.1 | 5 | | | | | | |
| | Attapulgite | | | | | | | | |
| | High-purity nano-modified montmorillonite | | | 1 | 15 | 1 | 15 | 1 | |
| Deodorizing factor | Nano-titanium dioxide | 0.1 | 0.5 | | | | | | |
| | Allophane | | | | | | | | |
| | Hydrophilic | | | 0.6 | 3 | 0.6 | 3 | 0.6 | |

(continued)

| Raw materials and components | | Example 1 | | Example 2 | | Comparative Example 1 | | Comparative Example 2 | |
|---|---|---|---|---|---|---|---|---|---|
| | | Core | Shell layer | Core | Shell layer | Core | Shell layer | Core | No shell layer |
| | modified ultra-fine silica | | | | | | | | |
| | Baking soda | | | 0.3 | 1.5 | 0.3 | 1.5 | 0.3 | |
| Anti-mold factor | Copper-loaded phosphate antimicrobial powder | | | | | | | | |
| | Silver-loaded zirconium phosphate antibacterial powder | 0.5 | | | | | | | |
| | 5-chloro-2-methyl-4-isothiazolin-3-one | | 1 | 1 | 1 | | | 1 | |
| Weight ratio of shell layer to core | | 1:4.5 | | 1:5 | | 1:4.5 | | Only core | |

Table 2

| Conditions of method | Example 1 | Example 2 | Comparative Example 1 | Comparative Example 2 |
|---|---|---|---|---|
| Plant fiber fineness of raw materials (mesh) | 200 | 400 | 400 | 400 |
| Water content control of the core intermediate product (%) | 40 | 30 | 30 | 30 |
| Mold aperture diameter of the granulating device (mm) | 3 | 2 | 2 | 2 |
| Mold aperture length of the granulating device (mm) | 12 | 8 | 8 | 8 |
| Mold compression ratio | 4 | 4 | 4 | 4 |
| Distance between the knife blade and the lower surface of the mold (mm) | 0.5 | 0.1 | 0.1 | 0.1 |
| Sieving with 8-mesh filter sieve after core pressing (Yes/No) | Yes | Yes | No | Yes |
| Plant fiber fineness of the shell layer (mesh) | 80 | 100 | 100 | Not |
| Water content control of the undried shell layer (%) | 45 | 35 | 35 | Not |
| Rotational speed of the wrapping device (r/min) | 55 | 35 | 35 | Not |
| Wrapping time (min) | 3 | 5 | 5 | Not |
| Thickness of the wrapping shell layer (mm) | 0.6 | 0.8 | 0.8 | Not |

(continued)

| Conditions of method | Example 1 | Example 2 | Comparative Example 1 | Comparative Example 2 |
|---|---|---|---|---|
| Sieving with 5-mesh filter sieve and 8-mesh filter sieve after wrapping (Yes/-No) | Yes | Yes | No | Not |
| Overall water content control of the particles after wrapping (before drying) (%) | 40 | 30 | 30 | Not |
| Drying temperature (°C) | 75 | 65 | 65 | 65 |
| Water content control of finished particles after drying (%) | 10 | 6 | 6 | 6 |
| Rotational speed of the polishing device (r/min) | 35 | 55 | / | 55 |
| Polishing time (min) | 15 | 25 | / | 25 |
| Sieving with 10-mesh filter sieve after polishing (Yes/No) | Yes | Yes | / | Yes |

**Test sections**

1) Test of bulk density: The weight of the specimen flowing through a funnel of specific dimensions into a standard volumetric volume is weighed and the result is calculated.

Apparatus and device: A device for determining the bulk density.

Analysis steps: The cat litter specimen is poured into the funnel above the closed partition, the amount of the cat litter specimen is flush with the mouth of the funnel, the partition is withdrawn, the cat litter specimen naturally flows into the material tank below, the vertebral body above the material tank are scraped off along the mouth of the cup, and the specimen in the material tank is weighed.

Calculation of results: The bulk density $\rho$, expressed in g/L, is calculated as follows:

$$\rho = m/v \times 100\%$$

wherein, m - value of the weight of the specimen in grams (g).

v - value of the volume of the material tank in milliliters (mL).

1) Test of the bulk density of the cat litter:

2) Test of water content: The sample is heated by a halogen/infrared lamp using programmed heating, and is weighed continuously and automatically until a constant weight is achieved and the result is reported.

Apparatus and device: Rapid water meter: halogen/infrared lamp heating type, sensibility specification of 0.001g.

Analysis steps: About 2g of cat litter samples is flattened in the drying tray of the rapid water meter, the drying temperature is controlled to be 105 °C. The measurement program is started, and ended after 10 min of measurement to obtain results.

3) Detection of flowability index Fw: Measurement is carried out in accordance with GB/T 31057.3-2018 standard Part 3: Measurement of the flowability index.

4) Detection of dust content: A certain amount of cat litter samples is sieved to observe the percentage amount of material that passes through a 30-mesh sieve.

Apparatus and device: Wire mesh test sieve should be a series of test sieve and standard sieve shaker according to provisions of GB/T6003.1-2012.

Note 1: The test sieve has a 30 mesh size of 500 $\mu$m and a frame diameter of 200 mm.

Note 2: The standard sieve shaker has a specification with the vibration frequency of 1440 times/min.

Analysis steps: 500g (m$_2$) of finished cat litter is randomly divided into 5 groups with 100g each group, poured into a 30-mesh standard sieve, and placed in a vibration sieve. The sealing lid is covered, the vibration sieve is started for vibration for 15s, and the powders that pass through the sieve are collected after the vibration in 5 groups, and weighted in total as m$_p$.

The formula for calculating the ratio of dust content is as follows: F = m$_p$/m$_2$ × 100%

wherein: F - ratio of dust content (%);

m$_2$ - total weight of the specimen in grams (g); and

m$_p$ - total weight of powders that pass through the sieve, in grams (g).

5) Test of agglomeration weight in grams: The weight of the agglomerates after the cat litter absorbs water and condenses into agglomerates.

6) Test of agglomerated strength: The agglomerated plant fiber cat litter is dropped freely from a certain height to a marble or other inelastic table. The largest piece of the undispersed plant fiber cat litter agglomeration is picked up and weighed. The ratio of the weight of the largest undispersed plant fiber cat litter to the weight of the dropped cat litter before falling is the agglomeration strength.

7) Test of water absorption rate: After the specimen absorbs water and condenses into agglomerates, the agglomerates are weighted.

Apparatus and device comprise:

a) a balance with a sensory specification of 0.01g;

b) a acid burette of 25mL; and

c) a pipette of 20mL.

Analysis steps: The sampled cat litter is laid in the sample basin to form the cat litter with a thickness of about 8-10cm. 20mL of 1% sodium chloride solution with a temperature of 36-40°C is sucked with the pipette and transferred to the acid bureter. The acid bureter is adjusted to be about 3cm away from the sample plane. When the acid bureter is opened, all the solution flows into the sample within 30s. After 60s, the agglomerated sample is taken out, and weighed as m on the balance with a sensitivity specification of 0.01g. Three groups of samples are tested using this method, and then the average value is calculated. The formula for calculating water absorption rate is as follows:

$$X = 20/ (m\text{-}20) \times 100\%$$

wherein: X - water absorption rate, in %; and m - weight of agglomeration, in grams.

8) Detection of agglomerated mold: Coliform content is measured according to GB/T18869, Salmonella content is measured according to GB/T13091, the total mold content is measured according to GB/T13092, and aflatoxin B1 content is measured according to GB/T17480.

9) Detection method of sphericity:

By processing the image, the measurement software automatically counts the number of particles and then calculates the number of pixels contained in each particle to obtain parameters such as the area, equivalent diameter, equivalent circumference, actual circumference, roundness, etc. of the particle, and thus obtaining a particle shape. The main morphological parameters of the particles measured by the graphical image analyzer are the aspect ratio and the roundness coefficient. The aspect ratio is the ratio of the length to the diameter for a cylindrical object. Sphericity is calculated between 0 and 1, the smaller the value, the more irregular the shape of the particle.

The results of the test are shown in Table 3.

Table 3

| Index of performance | Example 1 | Example 2 | Comparative Example 1 | Comparative Example 2 | Comparative Example 3 (commercially available tofu cat litter) | Compara tive Example 4 |
|---|---|---|---|---|---|---|
| Diameter distribution of cat litter finished product particles (mm) | 3.5-4 | 2.5-3 | 2.5-12 | 2-2.5 | 2-3 | 1.6-4.2 |
| Length distribution cat litter of cat litter finished product particles (mm) | 3.5-12 | 2.5-9 | 2.5-12 | 2-7.5 | 10-25 | 1.9-4.5 |
| Bulk density of cat litter finished product particles (g/L) | 320 | 360 | 375 | 390 | 580 | 990 |
| Sphericity (roundness value and distribution proportion) | Particles with roundness value greater than 0.7 account for 88%; and particles with roundness value less than 0.3 account for 1.5% | Particles with roundness value greater than 0.7 account for 95%; and particles with roundness value less than 0.3 account for 0.5% | Particles with roundness value greater than 0.7 account for 86%; and particles with roundness value less than 0.3 account for 2% | Particles with roundness value greater than 0.7 account for 92%; and particles with roundness value less than 0.3 account for 0.5% | Particles with roundness value greater than 0.7 account for 75%; and particles with roundness value less than 0.3 account for 5% | Particles with roundness value greater than 0.7 account for 97%; and particles with roundness value less than 0.3 account for 0.3% |
| Flowability index Fw | 88 | 94 | 78 | 91 | 64 | 97 |
| Dust content of cat litter | 0.04 | 0.03 | 0.4 | 0.3 | 0.5 | 0.6 |
| Agglomeration weight in grams (g/20g water) | 28 | 29 | 28 | >120 | 47 | 66 |
| Agglomeration strength (%) | 94 | 97 | 89 | 0 | 93 | 93 |
| Water absorption rate (%) | 250 | 222 | 250 | <20 | 74 | 44 |
| The number of days for the start of mold formation (days) | >30 | >30 | 6 | >30 | 6 | >15 |

In summary, by comparing the Examples and the Comparative Example, the cat litter of the present application has better flowability, is less susceptible to mold, has a better water absorption rate, has a lower dust content, and is more suitable for use by cats.

The foregoing is only a specific embodiment of the present application, but the scope of protection of the present application is not limited thereto, and any skilled in the art can easily think of a variety of equivalent modifications or substitutions within the disclosure of the present application, which should be covered by the scope of protection of the present application. Therefore, the scope of protection of the present application shall be subject to the scope of protection of claims.

**Claims**

1. A cat litter, **characterized in that**, the cat litter is a core-shell structure comprising:

   a core, comprising the following components: 100 parts by weight of a non-grain plant fiber, 0.6-12 parts by weight of an agglomeration factor, 0.6-12 parts by weight of a water absorption factor, 0.13-2.23 parts by weight of a breeding improvement factor, 0.13-2.23 parts by weight of a deodorizing factor, and 0.13-2.23 parts by weight of an anti-mold factor; and
   a shell layer, comprising the following components: 100 parts by weight of a non-grain plant fiber, 99.5-600 parts by weight of an agglomeration factor, 3.33-100 parts by weight of a water absorption factor, 33.3-300 parts by weight of a breeding improvement factor, 3.33-100 parts by weight of a deodorizing factor, and 0.66-20 parts by weight of an anti-mold factor;
   wherein a weight ratio of the shell layer to the core is 1: (4-5);
   the non-grain plant fiber comprises one or more of a bagasse fiber, a bamboo fiber, an eucalyptus fiber, a giant fungus grass fiber, a straw fiber, an eulaliopsis binata fiber, and a bamboo shoot shell fiber;
   the agglomeration factor comprises one or more of whey protein, sodium alginate, corn protein, montmorillonite, carboxymethyl cellulose and derivatives thereof, guar gum, native starch, pregelatinized starch, and jelly glue;
   the water absorption factor comprises one or more of polyacrylates, starch-acrylate polymers, starch-acrylonitrile graft copolymers, acrylamide-acrylonitrile-acrylic acid terpolymers, polyacrylamides and derivatives thereof, and polyvinyl alcohol;
   the breeding improvement factor comprises one or more of attapulgite, polyacrylamide-attapulgite composite adsorbent, high-purity nano-modified montmorillonite, plant essential oil, hydrated sodium aluminosilicate, diatomaceous earth, and zeolite;
   the deodorizing factor comprises one or more of allophane, hydrophilic modified ultrafine silica, baking soda, nano-zinc oxide, and nano-titanium dioxide; and
   the anti-mold factor comprises one or more of esterified glucomannan, hydrated sodium calcium aluminosilicate, silver-loaded zirconium phosphate antibacterial powder, copper-loaded phosphate antimicrobial powder, organic zinc ion antimicrobial powder, 5-chloro-2-methyl-4-isothiazolin-3-one, 1,2-benzisothiazolidine-3-one, 4,5-dichloro-2-n-octyl-3-isothiazolinone, 2-methyl-4-isothiazolin-3-one, and N-octyl-4-isothiazolin-3-one.

2. The cat litter according to claim 1, **characterized in that** the cat litter satisfies at least one of the following conditions:

   the cat litter has a water content of 5% to 10%;
   the cat litter passes through a 10-mesh sieve;
   the cat litter has a dust content of ≤0.05%;
   the cat litter has a bulk density of 280-400g/L;
   the cat litter is in a shape of a rod, the core is in a shape of a rod, the rod has a diameter of 2-3.5mm, and the rod has a ratio of length to diameter of (1-3):1; and
   the shell layer has a thickness of 0.5-3mm.

3. The cat litter according to claim 1, **characterized in that** the non-grain plant fiber in the cat litter has a particle size that can pass through 80- to 100-mesh sieve.

4. A method for preparing a cat litter, **characterized in that**, the method comprises steps of:

   providing a first raw material for a core comprising a component of the core of any one of claims 1-3 and 120-100 parts by weigh of water;
   providing a second raw material for a shell layer comprising a component of the shell layer of any one of claims 1-3 and 133-1000 parts by weigh of water;
performing mixing and first stirring of the first raw material to obtain a first mixture,
performing granulating and first sieving of the first mixture to obtain a core intermediate product;
performing mixing and second stirring of the second raw material to obtain a shell layer mixture;
wetting the core intermediate product and then wrapping the wetted core intermediate product with the shell layer mixture to prepare a wrapped mixture; and
performing second sieving, drying and third sieving of the wrapped mixture sequentially to prepare the cat litter.

5. The method according to claim 4, **characterized in that** the method satisfies at least one of the following conditions:

the first stirring is carried out at a speed of 5-850 r/min for 0.5-5 minutes;
the granulating is carried out at a speed of 800-1000 r/min;
the second mixing is carried out at a speed of 0-1500r/min for 0.5-3 minutes;
the core intermediate product has a water content below 45%;
the core intermediate product is in a shape of a rod, has a diameter of 2-3.5mm, and has a ratio of length to diameter of (1-3):1;
the shell layer mixture has a water content below 50%;
the wrapping is carried out for 2-6 minutes at a rotational speed of 30-60 r/min of a device;
the wrapped mixture has a water content below 45%;
the product obtained after the second sieving has a particle size that can pass through m-mesh sieve, 5 < m < 8;
the product obtained after the third sieving has a particle size that can pass through n-mesh sieve, 8 < n < 12; and
the drying is carried out at a temperature of 65-75°C.

6. The method according to claim 4 or 5, **characterized in that** the method further comprises polishing and shaping the dried product after the drying, in which the polishing is carried out at a rotational speed of 30-60 r/min for 15-30 min.

## Patentansprüche

1. Katzenstreu, **dadurch gekennzeichnet, dass** sie eine Kern-Hülle-Struktur aufweist, die Folgendes umfasst:

einen Kern, der die folgenden Komponenten umfasst: 100 Gewichtsteile einer nicht-körnigen Pflanzenfaser, 0,6-12 Gewichtsteile eines Agglomerationsfaktors, 0,6-12 Gewichtsteile eines Wasserabsorptionsfaktors, 0,13-2,23 Gewichtsteile eines Zuchtverbesserungsfaktors, 0,13-2,23 Gewichtsteile eines Desodorierungsfaktors und 0,13-2,23 Gewichtsteile eines Antischimmelfaktors; und
eine Hüllschicht, die die folgenden Komponenten umfasst: 100 Gewichtsteile einer nicht-körnigen Pflanzenfaser, 99,5-600 Gewichtsteile eines Agglomerationsfaktors, 3,33-100 Gewichtsteile eines Wasserabsorptionsfaktors, 33,3-300 Gewichtsteile eines Zuchtverbesserungsfaktors, 3,33-100 Gewichtsteile eines Desodorierungsfaktors und 0,66-20 Gewichtsteile eines Antischimmelfaktors;
wobei das Gewichtsverhältnis der Hüllschicht zum Kern 1: (4-5) beträgt;
die nicht-körnige Pflanzenfaser eine oder mehrere der folgenden Fasern umfasst: Bagassefaser, Bambusfaser, Eukalyptusfaser, Riesenpilzgrasfaser, Strohfaser, Eulaliopsis-binata-Faser und Bambussprossenschalenfaser;
der Agglomerationsfaktor einen oder mehrere der folgenden Stoffe umfasst: Molkenprotein, Natriumalginat, Maisprotein, Montmorillonit, Carboxymethylcellulose und Derivate davon, Guarkernmehl, native Stärke, vorverkleisterte Stärke und Geleekleber;
der Wasserabsorptionsfaktor eines oder mehrere der folgenden Materialien umfasst: Polyacrylate, Stärke-Acrylat-Polymere, Stärke-Acrylnitril-Pfropfcopolymere, Acrylamid-Acrylnitril-Acrylsäure-Terpolymere, Polyacrylamide und deren Derivate sowie Polyvinylalkohol;
der Zuchtverbesserungsfaktor einen oder mehrere der folgenden Stoffe umfasst: Attapulgit, Polyacrylamid-Attapulgit-Kompositadsorbent, hochreines nanomodifiziertes Montmorillonit, ätherisches Pflanzenöl, hydratisiertes Natriumaluminosilikat, Kieselgur und Zeolith;
der Desodorierungsfaktor eines oder mehrere der folgenden Stoffe umfasst: Allophan, hydrophil modifizierte ultrafeine Kieselsäure, Backpulver, Nano-Zinkoxid und Nano-Titandioxid; und
der Antischimmelfaktor eines oder mehrere der folgenden Stoffe umfasst: verestertes Glucomannan, hydratisiertes Natrium-Calcium-Aluminosilikat, antibakterielles Zirkoniumphosphatpulver mit Silberanteil, antimikrobielles Phosphatpulver mit Kupferanteil, antimikrobielles Pulver mit organischen Zinkionen, 5-Chlor-2-Methyl-4-Isothiazolin-3-on, 1,2-Benzisothiazolidin-3-on, 4,5-Dichlor-2-n-Octyl-3-Isothiazolinon, 2-Methyl-4-Isothiazolin-3-on und N-Octyl-4-Isothiazolin-3-on.

**2.** Katzenstreu nach Anspruch 1, **dadurch gekennzeichnet, dass** sie mindestens eine der folgenden Bedingungen erfüllt:

die Katzenstreu einen Wassergehalt von 5% bis 10% aufweist;
die Katzenstreu ein 10-Maschen-Sieb passiert;
die Katzenstreu einen Staubgehalt von ≤0,05% aufweist;
die Katzenstreu eine Schüttdichte von 280-400g/L aufweist;
die Katzenstreu die Form eines Stäbchens aufweist, der Kern die Form eines Stäbchens aufweist, das Stäbchen einen Durchmesser von 2-3,5 mm aufweist, und das Verhältnis von Länge zu Durchmesser (1-3):1 beträgt; und
die Hüllschicht eine Dicke von 0,5-3 mm aufweist.

**3.** Katzenstreu nach Anspruch 1, **dadurch gekennzeichnet, dass** die nicht-körnigen Pflanzenfasern in der Katzenstreu eine Partikelgröße aufweisen, die ein Sieb mit 80 bis 100 Maschenweite passieren kann.

**4.** Verfahren zur Herstellung einer Katzenstreu, **dadurch gekennzeichnet, dass** das Verfahren die folgenden Schritte umfasst:

Bereitstellung eines ersten Rohstoffs für einen Kern, der eine Komponente des Kerns nach einem der Ansprüche 1-3 und 120-100 Gewichtsteile Wasser umfasst;
Breitstellung eines zweiten Rohstoffs für eine Hüllschicht, der eine Komponente der Hüllschicht nach einem der Ansprüche 1-3 und 133-1000 Gewichtsteile Wasser umfasst;
Mischen und erstes Rühren des ersten Rohstoffs, um eine erste Mischung zu erhalten;
Granulieren und erstes Sieben der ersten Mischung, um ein Kernzwischenprodukt zu erhalten;
Mischen und zweites Rühren des zweiten Rohstoffs, um eine Hüllschichtmischung zu erhalten;
Befeuchten des Kernzwischenprodukts und anschließendes Umhüllen des befeuchteten Kernzwischenprodukts mit der Hüllschichtmischung, um eine umhüllte Mischung herzustellen; und
zweites Sieben, Trocknen und drittes Sieben der umhüllten Mischung nacheinander, um das Katzenstreu herzustellen.

**5.** Verfahren nach Anspruch 4, **dadurch gekennzeichnet, dass** das Verfahren mindestens eine der folgenden Bedingungen erfüllt:

das erste Rühren bei einer Geschwindigkeit von 5-850 U/min für 0,5-5 Minuten durchgeführt wird;
das Granulieren bei einer Geschwindigkeit von 800-1000 U/min durchgeführt wird;
das zweite Mischen bei einer Geschwindigkeit von 0-1500 U/min für 0,5-3 Minuten durchgeführt wird;
das Kernzwischenprodukt einen Wassergehalt von weniger als 45% aufweist;
das Kernzwischenprodukt die Form eines Stäbchens, einen Durchmesser von 2-3,5 mm und ein Verhältnis von Länge zu Durchmesser von (1-3):1 aufweist;
die Hüllschichtmischung einen Wassergehalt von unter 50% aufweist;
das Umhüllen 2-6 Minuten lang bei einer Rotationsgeschwindigkeit von 30-60 U/min einer Vorrichtung durchgeführt wird;
die umhüllte Mischung einen Wassergehalt von weniger als 45% aufweist;
das nach der zweiten Siebung erhaltene Produkt eine Teilchengröße aufweist, die durch ein m-Maschensieb, 5 < m < 8, hindurchgehen kann;
das nach der dritten Siebung erhaltene Produkt eine Teilchengröße aufweist, die durch ein n-Maschensieb, 8 < n < 12 ,hindurchgehen kann; und
die Trocknung bei einer Temperatur von 65-75°C durchgeführt wird.

**6.** Verfahren nach Anspruch 4 oder 5, **dadurch gekennzeichnet, dass** das Verfahren ferner das Polieren und Formen des getrockneten Produkts nach dem Trocknen umfasst, wobei das Polieren bei einer Rotationsgeschwindigkeit von 30-60 U/min für 15-30 Minuten durchgeführt wird.

## Revendications

**1.** Litière pour chats, **caractérisée en ce que**, la litière pour chats a une structure noyau-coquille comprenant :

un noyau, comprenant les composants suivants : 100 parts en poids d'une fibre végétale non céréalière, 0,6 à 12 parts en poids d'un facteur d'agglomération, 0,6 à 12 parts en poids d'un facteur d'absorption d'eau, 0,13 à 2,23 parts en poids d'un facteur d'amélioration d'élevage, 0,13 à 2,23 parts en poids d'un facteur désodorisant et 0,13 à 2,23 parts en poids d'un facteur antimoisissure ; et

une couche de coquille, comprenant les composants suivants : 100 parts en poids d'une fibre végétale non céréalière, 99,5 à 600 parts en poids d'un facteur d'agglomération, 3,33 à 100 parts en poids d'un facteur d'absorption d'eau, 33,3 à 300 parts en poids d'un facteur d'amélioration d'élevage, 3,33 à 100 parts en poids d'un facteur désodorisant et 0,66 à 20 parts en poids d'un facteur antimoisissure ;

dans laquelle un rapport en poids de la couche de coquille au noyau est de 1 : (4-5) ;

la fibre végétale non céréalière comprend une ou plusieurs parmi une fibre de bagasse, une fibre de bambou, une fibre d'eucalyptus, une fibre d'herbe fongique géante, une fibre de paille, une fibre d'Eulaliopsis binata et une fibre de coquille de pousse de bambou ;

le facteur d'agglomération comprend une ou plusieurs parmi la protéine de lactosérum, l'alginate de sodium, la protéine de maïs, la montmorillonite, la carboxyméthylcellulose et leurs dérivés, la gomme de guar, l'amidon natif, l'amidon prégélatinisé et le gel ;

le facteur d'absorption d'eau comprend un ou plusieurs parmi les polyacrylates, les polymères amidon-acrylate, les copolymères greffés amidon-acrylonitrile, les terpolymères d'acide acrylamide-acrylonitrile-acrylique, les polyacrylamides et leurs dérivés, et l'alcool polyvinylique ;

le facteur d'amélioration d'élevage comprend un ou plusieurs parmi l'attapulgite, un adsorbant composite polyacrylamide-attapulgite, une montmorillonite nano-modifiée de haute pureté, une huile essentielle végétale, l'aluminosilicate de sodium hydraté, la terre de diatomées et la zéolite ;

le facteur désodorisant comprend un ou plusieurs parmi l'allophane, la silice ultrafine modifiée hydrophile, le bicarbonate de soude, le nano-oxyde de zinc et le nano-dioxyde de titane ; et

le facteur antimoisissure comprend un ou plusieurs parmi le glucomannane estérifié, l'aluminosilicate de calcium sodique hydraté, une poudre antibactérienne de phosphate de zirconium chargé d'argent, une poudre antimicrobienne de phosphate chargé de cuivre, une poudre antimicrobienne d'ion zinc organique, 5-chloro-2-méthyl-4-isothiazoline-3-one, 1, 2-benzisothiazolidine-3-one, 4, 5-dichloro-2-n-octyl-3-isothiazolinone, 2-méthyl-4-isothiazoline-3-one et N-octyl-4-isothiazolin-3-one.

2. Litière pour chats selon la revendication 1, **caractérisée en ce qu'**elle satisfait à au moins l'une des conditions suivantes :

la litière pour chats a une teneur en eau de 5 à 10 % ;
la litière pour chats passe à travers un tamis à 10 mailles ;
la litière pour chats a une teneur en poussière de ≤0,05 % ;
la litière pour chats a une densité volumique de 280 à 400 g/L ;
la litière pour chats est en forme de barre, le noyau est en forme de barre, la barre a un diamètre de 2 à 3,5 mm et la barre a un rapport de longueur à diamètre de (1-3) : 1 ; et
la couche de coquille a une épaisseur de 0,5 à 3 mm.

3. Litière pour chats selon la revendication 1, **caractérisée en ce que** la fibre végétale non céréalière contenue dans la litière pour chats a une taille des particules qui peut passer à travers un tamis à 80 à 100 mailles.

4. Procédé de préparation d'une litière pour chats, **caractérisé en ce que**, le procédé comprend les étapes suivantes :

fournir une première matière première pour un noyau comprenant un composant du noyau selon l'une quelconque des revendications 1 à 3 et 120 à 100 parts en poids d'eau ;

fournir une deuxième matière première pour une couche de coquille comprenant un composant de la couche de coquille selon l'une quelconque des revendications 1 à 3 et 133 à 1000 parts en poids d'eau ;

effectuer un mélange et une première agitation sur la première matière première pour obtenir un premier mélange,

effectuer une granulation et un premier tamisage sur le premier mélange pour obtenir un produit intermédiaire de noyau ;

effectuer un mélange et une deuxième agitation sur la deuxième matière première pour obtenir un mélange de couche de coquille ;

mouiller le produit intermédiaire de noyau, puis envelopper le produit intermédiaire de noyau mouillé avec le mélange de couche de coquille pour préparer un mélange enveloppé ; et

effectuer un deuxième tamisage, un séchage et un troisième tamisage successivement sur le mélange enveloppé pour préparer la litière pour chats.

**5.** Procédé selon la revendication 4, **caractérisé en ce qu'**il satisfait à au moins une des conditions suivantes :

la première agitation est effectuée à une vitesse de 5 à 850 tr/min pendant 0,5 à 5 minutes ;
la granulation est effectuée à une vitesse de 800 à 1000 tr/min ;
le deuxième mélange est effectué à une vitesse de 0 à 1500 tr/min pendant 0,5 à 3 minutes ;
le produit intermédiaire de noyau a une teneur en eau inférieure à 45 % ;
le produit intermédiaire de noyau est en forme de barre, a un diamètre de 2 à 3,5 mm et a un rapport de longueur à diamètre de (1-3) : 1 ;
le mélange de couche de coquille a une teneur en eau inférieure à 50 %;
l'enveloppement est effectué pendant 2 à 6 minutes à une vitesse de rotation de 30 à 60 tr/min d'un appareil ;
le mélange enveloppé a une teneur en eau inférieure à 45 % ;
le produit obtenu après le deuxième tamisage a une taille des particules qui peut passer à travers un tamis à m-mesh, 5<m<8 ;
le produit obtenu après le troisième tamisage a une taille des particules qui peut passer à travers un tamis à n-mesh, 8<n<12 ; et
le séchage est effectué à une température de 65 à 75°C.

**6.** Procédé selon la revendication 4 ou 5, **caractérisé en ce que** le procédé comprend en outre un polissage et un façonnage du produit séché après le séchage, dans lequel le polissage est effectué à une vitesse de rotation de 30 à 60 tr/min pendant 15 à 30 min.

Fig. 1

**EP 4 541 181 B1**

**Patent documents cited in the description**

- US 2023276766 A1

- US 2004079293 A1